# EUROPÄISCHE PATENTSCHRIFT

(11) **EP 1 078 587 B1**
(45) Veröffentlichungstag und Bekanntmachung des Hinweises auf die Patenterteilung: **07.07.2004**
(21) Anmeldenummer: 00117676.7
(22) Anmeldetag: 17.08.2000
(51) Int. Cl.: A47D 13/02, B60N 2/28

(54) **Kleinstkindersitz für den Transport eines Kleinstkindes in einem Kraftfahrzeug**
Baby seat for transporting an infant in an automotive vehicle
Siège pour bébé pour le transport d'un nourisson dans un véhicule automobile

(30) Priorität: 20.08.1999 DE 19939480
(43) Veröffentlichungstag der Anmeldung: 28.02.2001
(73) Patentinhaber: Schräder, Margarete, D-95352 Marktleugast (DE)
(72) Erfinder: Schräder, Margarete, D-95352 Marktleugast (DE)
(74) Vertreter: Tergau & Pohl Patentanwälte

(56) Entgegenhaltungen:
- EP-A- 0 486 184
- EP-A- 0 574 848
- EP-A- 0 824 877
- WO-A-97/07716
- US-A- 5 322 343
- US-A- 5 324 094
- US-A- 5 651 581

## Beschreibung

Die Erfindung bezieht sich auf einen Kindersitz für den Transport eines Kleinstkindes in einem Kraftfahrzeug.

Bei einem derartigen Kindersitz handelt es sich um einen sogenannten "Gruppe-Null-Plus-Sitz" für im Säuglingsalter befindliche Kinder, die mehr liegend als sitzend befördert werden. In einem solchen Kindersitz wird das Kind mit dem Kopf voraus in Fahrtrichtung des Fahrzeuges befördert (Re-Board-System).

Ein Kindersitz mit den gattungsbildenden Merkmalen des Anspruches 1 ist aus EP 0 824 877 A1 bekannt. Die beim dortigen Kindersitz verwendeten Tragbügel sind jeweils mit einer Durchgriffsöffnung für eine Traghand versehene Griffelemente, wie sie z.B. als Traggriffe von Koffern her bekannt sind. Sie weisen eine nur begrenzte Längserstreckung in Längsrichtung der beiden Seitenflanken der Sitzschale auf, wie das z.B. auch bei dem Tragegriff eines Koffers - bezogen auf die Kofferlängsrichtung - regelmäßig der Fall ist. Außerdem sind bei dem bekannten Kindersitz die in Längsrichtung der Seitenflanken der Sitzschale verlaufenden Schwenkachsen der Tragegriffe an den oberen Enden jeweils eines in einer Seitenflanke des Kindersitzes versenkbaren Zuglenkers positioniert. In Ruhestellung des Kindersitzes sind die Zuglenker in die Seitenflanken der Sitzschale versenkt eingeschoben. Die am oberen Ende der beiden Zuglenker schwenkbar angeordneten Traggriffe liegen in Ruhestellung nach unten geschwenkt inaktiviert an den Außenseiten der Seitenflanken der Sitzschale an, so dass der Raum zwischen den beiden Seitenflanken für das einsitzende Kleinstkind uneingeschränkt zur Verfügung steht.

Zur Überführung in die Tragestellung werden die Zuglenker nach oben aus den Seitenflanken der Sitzschale in eine Anschlagstellung herausgezogen. In dieser Stellung sind die Zuglenker an ihren unteren Enden um jeweils eine zur Schwenkachse des zugeordneten Griffelementes parallele weitere Schwenkachse schwenkbar mit dem Kindersitz verbunden. Diese weitere, am unteren Zuglenkerende positionierte Schwenkachse ist durch jeweils axial vorstehende Anschlagstummel gebildet und deren Verschiebeweg ist nach oben begrenzt.

Der Erfindung liegt die Aufgabe zugrunde, einen Kindersitz für den Transport eines Kleinstkindes in einem Kraftfahrzeug zu schaffen, der bequem getragen werden kann.

Die Aufgabe wird gelöst mit den Merkmalen des Patentanspruches 1. Da an der Sitzschale zwei Tragbügel um getrennte voneinander in Sitzbreite beabstandete Längsachsen schwenkbar angeordnet sind, können die Tragbügel in hochgeschwenkter Trageposition dort, wo sie sich entweder berühren oder sehr nahe kommen, von der tragenden Hand umgriffen werden, ohne dass die Tragbügel in eine ergonomisch ungünstige Haltung verdreht werden müssen, bei der die Griffachse quer zur Fortbewegungsrichtung der den Kindersitz tragenden Person steht. Außerdem kann die Position der tragenden Hand in Längsrichtung der Tragbügel problemlos verschoben werden. Dadurch kann die gewünschte Neigung der Sitzschale in Längsrichtung unabhängig von der genauen Position des Kindes in der Sitzschale herbeigeführt werden. Durch den vergrößerten Abstand der schwenkgelagerten Enden eines jeden Tragbügels voneinander ist diese Längsrichtung mit bedienungsgünstig langen Hebelarmen wählbar. Außerdem kann der Kindersitz bequem von zwei Personen getragen werden.

In einer bevorzugten Ausgestaltung der Erfindung können die Tragbügel seitlich mit der Sitzschale in einer Rastposition verrasten. Dann dienen sie in der Rastposition zugleich als Auflager für die Sitzschale und dabei untergreifen die in Rastposition befindlichen Tragbügel die Sitzschale.

Da die Höhe der Sitzschale niedriger ist als deren (halbe) Längsausdehnung, ist die Höhe der Tragbügel in der Trageposition auch in dieser Ausgestaltung deutlich kleiner als bei dem eingangs erwähnten bekannten Kleinstkindersitz, so daß er auch von kleineren Personen getragen werden kann.

Insbesondere weist jeder Tragbügel einen gebogenen Mittenbereich auf, der in Rastposition die Kufen einer Schaukel bildet, so daß der abgestellte Kleinstkindersitz geschaukelt werden kann. Durch die besonders im Mittelbereich gebogene Form der Tragbügel kann außerdem bei der Befestigung des Kleinstkindersitzes im Kraftfahrzeug seine Neigung um eine Querachse stufenlos eingestellt werden. Dies ist insbesondere bei kurzen Dreipunkt-Sicherheitsgurten von Vorteil, wie sie häufig auf Rücksitzen von Kraftfahrzeugen anzutreffen sind.

In einer weiteren bevorzugten Ausgestaltung der Erfindung weist die Sitzschale angeformte Stützen zum kippsicheren Abstellen auf. Die Stützen sind insbesondere mit einer seitlichen Ausnehmung zur Aufnahme der Tragbügel in Rastposition versehen, wobei die Ausnehmungen an den freien Enden der Stützen derart angeordnet sind, daß die Tragbügel in Rastposition über die durch die freien Enden der Stützen festgelegte Auflageebene hinausragen. Die Tragbügel wirken dann als Lagergestell und können je nach Formgebung entweder dazu benutzt werden, die Standsicherheit des Kleinstkindersitzes zu erhöhen oder durch eine entsprechende gebogene Form den Kleinstkindersitz zu einer Schaukel umgestalten.

In einer weiteren bevorzugten Ausgestaltung der Erfindung verrasten die Tragbügel in den Ausnehmungen.

Zur weiteren Erläuterung der Erfindung wird auf die Ausführungsbeispiele der Zeichnung verwiesen. Es zeigen:
- Fig. 1: in einer perspektivischen Darstellung einen Kleinstkindersitz gemäß der Erfindung mit eingeklappten Tragbügeln, und
- Fig. 2: den von einer Person getragenen Kleinstkindersitz mit aufgeklappten Tragbügeln.

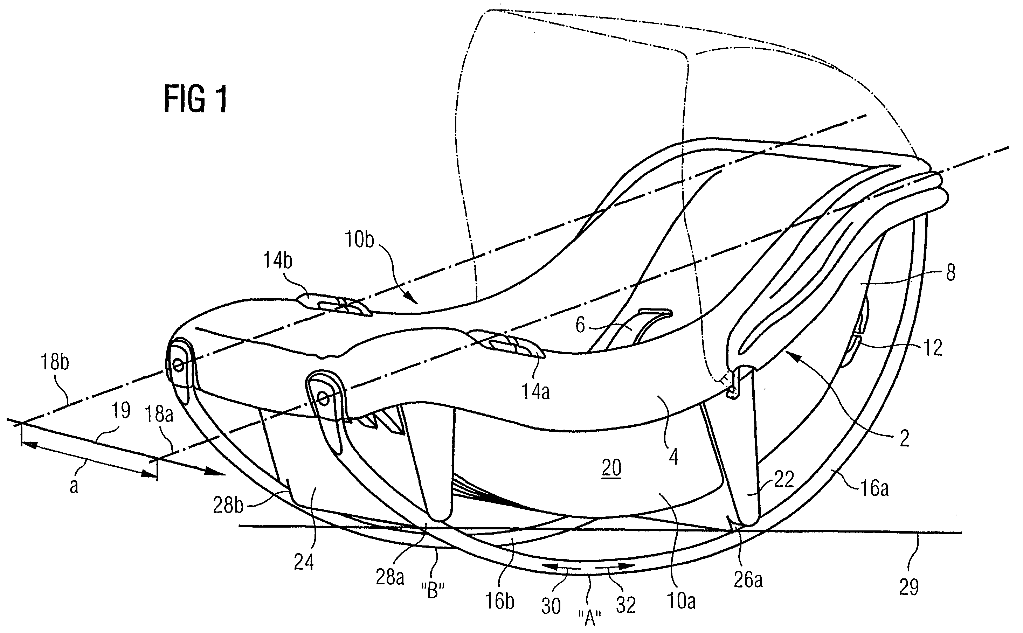

Gemäß Fig. 1 umfaßt der Kleinstkindersitz eine Sitzwanne oder Sitzschale 2, die im Liegebereich mit einem Polsterbezug 4 sowie mit einem Rückhaltesystem 6 versehen ist. Zur Befestigung auf dem Sitz eines Kraftfahrzeuges mit Hilfe eines Dreipunktgurtes sind an der Rückseite 8 und an den Seitenflanken 10a,b jeweils Gurtführungen 12 bzw. 14a,b angeformt, die zur Führung des Diagonal- bzw. Beckengurtes des Dreipunktgurtes dienen.

An der Sitzschale 2 sind Tragbügel 16a,b, im Beispiel ein gebogenes Rohr, jeweils um eine Längsachse 18a bzw. b schwenkbar angeordnet. Die zueinander parallelen Längsachsen 18a,b sind voneinander in Querrichtung 19 im Abstand a angeordnet. Um einen möglichst großen Abstand a zu erzielen, sind die Schwenklager der Tragbügel 16a,b in den Eckbereichen der Stirnseiten der Sitzschale 2 gelagert.

Die Sitzschale 2 besteht aus einem gebogenen Grundkörper 20, an dem Stützen 22 und 24 angeformt sind, die bei aufgeklappten Tragbügeln 16a,b für einen sicheren Halt des Kleinstkindersitzes beim Abstellen sorgen. Im Ausführungsbeispiel sind die Stützen 22,24 an den Grundkörper 20 angeformt und bilden quer unter ihm verlaufende Kufen.

An ihrem seitlichen Rand sind die Stützen 22,24 jeweils mit Ausnehmungen 26a,b bzw. 28a,b zur Aufnahme der Tragebügel 16a,b im eingeklappten Zustand versehen. Die Ausnehmungen 26a,b bzw. 28a,b befinden sich jeweils am vom Grundkörper 20 abgewandten freien Ende der Stützen 22,24 und sind derart auf den Durchmesser der Tragbügel 16a,b abgestimmt, daß diese im eingeklappten Zustand zumindest in ihrem Mittenbereich über eine von den Stützen 22,24 gebildete Auflageebene 29 hinausragen und somit beim Abstellen der Sitzschale 2 als Auflager dienen. Die Ausnehmungen 26a,b,28a,b sind außerdem derart gestaltet, daß die Tragbügel 16a,b im eingeklappten Zustand in den Ausnehmungen 26a,b,28a,b verrasten und dort sicher gehalten werden.

Die Tragbügel 16a,b bestehen im Ausführungsbeispiel aus einem gebogenen Rohr und bilden somit die Kufen einer Schaukel.

Im Ausführungsbeispiel befinden sich die Auflagepunkte "A" und "B" etwa mittig zwischen den Stützen 22 und 24 unterhalb des Schwerpunktes der Sitzschale. Durch die gebogene Form der als Kufen wirkenden Tragbügel 16a,b können nun die Auflagepunkte "A" und "B" durch eine entsprechende Neigung der Sitzschale problemlos variiert werden, d.h. in Richtung der Pfeile 30, 32 verlagert werden, so daß die Neigung der Sitzschale 2 stufenlos eingestellt werden kann. Eine Erhöhung der Neigung, d.h. eine Verlagerung der Auflagepunkte "A" und "B" in Richtung des Pfeiles 30 oder ein Aufrichten der Sitzschale 2, ist insbesondere dann erforderlich, wenn der Kleinstkindersitz mit dem Dreipunktgurt an einer Rücksitzbank fixiert werden muß, da dort oftmals die Gurtlänge nicht ausreicht, um mit dem durch die Gurtführung 12 an der Rückseite der Sitzschale 2 hindurchgeführten Diagonalgurt die Sitzschale 2 zu umschlingen.

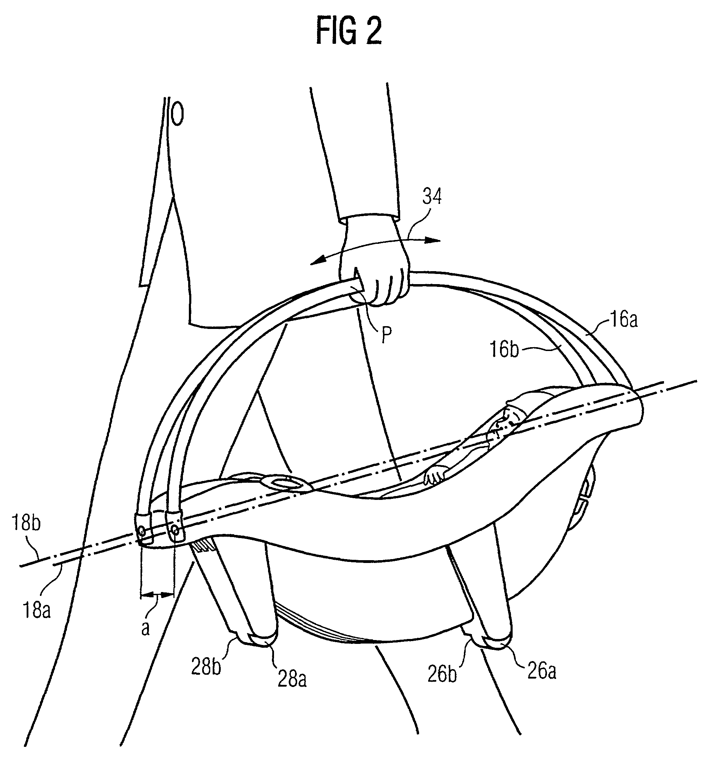

Gemäß Fig.2 werden für die Trageposition die Tragbügel 16a,b seitlich aus den Ausnehmungen 26a,28a bzw. 26b,28b heraus um die Längsachsen 18a,b geschwenkt. Die an den Ecken der Sitzschale 2 gelagerten Tragbügel 16a,b berühren sich nun im Mittenbereich in einem Berührungspunkt P und können dort problemlos von einer Hand zusammen umgriffen werden. Da die Längsachsen 18a,b der Tragbügel 16a,b durch die Eckbereiche der Sitzschale 2, d.h. möglichst weit außen verlaufen, so daß ihr Abstand a etwa annähernd der Breite der Sitzschale 2 entspricht, ist diese zuverlässig gegen ein Verschwenken um ihre Mittenlängsachse gesichert. Die Neigung der Sitzschale 2 um die Mittenquerachse beim Transport kann nun durch eine entsprechende Verlagerung der Griffposition In Richtung des Doppelpfeiles 34 problemlos eingestellt werden, wobei sich der ergonomisch günstige Tragebereich ausreichend weit über den Berührungspunkt P hinaus erstreckt, da die Hand die beiden spitzwinklig im Berührungspunkt P zusammenstoßenden Tragbügel 16a,b auch noch in einem deutlichen Abstand vom Berührungspunkt P umschließen kann.

Die Tragbügel 16a,b müssen nicht notwendigerweise im gesamten Bereich gebogen sein. Es reicht unter Umständen auch aus, allein den Mittenbereich der Tragbügel mit einer kreisförmigen Biegung zu versehen. Um ein bequemes Tragen zu ermöglichen könnte auf jeden Tragbügel 16a,b ein verschiebbares Griffpolster 34 aufgeklipst sein.

Die Tragbügel können auch die Form eines U bilden und im Mittenbereich geradlinig ausgebildet sein. In dieser Ausführungsform kann jedoch der Kleinstkindersitz nicht mehr geschaukelt oder in seiner Neigung variierbar im Rückhaltesystem des Kraftfahrzeugs positioniert werden. Die Tragbügel können auch durch entsprechende Formgebung so gestaltet werden, daß sie sowohl im Mittenbereich gekrümmt sind und sich außerdem über eine größere Strecke berühren, so daß vermieden ist, daß diese im Griffbereich V-förmig auseinanderlaufen. In diesem Falle können die Tragbügel im eingeklappten Zustand die Stützen untergreifen, so daß entsprechende Ausformungen zum Verrasten nicht mehr am Seitenrand sondern nach innen versetzt unten an den Stützen angeordnet sind.

### Bezugszeichenliste

- 2: Sitzschale
- 4: Polsterbezug
- 6: Rückhaltesystem
- 8: Rückseite
- 10a,b: Seitenflanke
- 16a,b: Tragbügel
- 18a,b: Längsachse
- 19: Querrichtung
- 20: Grundkörper
- 22,24: Stütze
- 26a,b: Ausnehmungen
- 28a,b: Ausnehmungen
- 29: Auflageebene
- 30,32: Pfeil
- 34: Doppelpfeil
- 35: Griffpolster
- A,B: Auflagepunkt
- P: Berührungspunkt

## Patentansprüche

1. Kindersitz für den Transport eines Kleinstkindes in einem Kraftfahrzeug, mit einer Sitzschale (2), an deren beiden Seitenflanken (10a,b) zwei Tragbügel (16a,b) um in Längsrichtung der Seitenflanken (10a,b) verlaufende Längsachsen (18a,b) schwenkbar angeordnet sind, in welcher Tragestellung die hochgeschwenkten Tragbügel (16a,b) im Mittenbereich oberhalb der Sitzschale (2) von einer Tragehand umgreifbar aneinanderliegen,
**dadurch gekennzeichnet,**
**dass** die Tragbügel (16a,b) mit ihren Enden in Längsrichtung der Seitenflanken (10a,b) beiderseits über den Schwerpunkt der Sitzschale (2) hinaus in die Eckbereiche der Sitzschale (2) hinausreichen und dort schwenkgelagert sind.

2. Kindersitz nach Anspruch 1,
**dadurch gekennzeichnet,**
**dass** die Tragbügel (16a,b) in abgesenkter Ruhestellung mit der Sitzschale (2) verrastete Auflager für die Sitzschale (2) bilden.

3. Kindersitz nach Anspruch 2
**dadurch gekennzeichnet,**
**dass** jeder Tragbügel (16a,b) zumindest einen von seiner Schwenkachse (18a,b) abgewandt gebogenen Mittelbereich aufweist, der in der Rastposition die Kufen einer Schaukel bildet.

4. Kindersitz nach einem der vorhergehenden Ansprüche, bei dem die Sitzschale (2) angeformte Stützen (22,24) zum eigenständig kippsicheren Abstellen aufweist.

5. Kindersitz nach Anspruch 4, bei dem die Stützen (22,24) mit jeweils einer seitlichen Ausnehmung (26a,b, 28a,b) zur verrastenden Aufnahme der Tragbügel (16a,b) versehen sind.

6. Kindersitz nach Anspruch 5, bei dem die Ausnehmung (26a,b, 28a,b) am freien Ende der Stützen (22,24) derart angeordnet sind, dass die Tragbügel (16a,b) in Rastposition über die durch die freien Enden der Stützen (22,24) festgelegte Auflageebene (19) hinausragt.

## Claims

1. Child's seat for transporting a baby in a motor vehicle, having a seat shell (2), on the two side flanks (10a,b) of which two supporting hoops (16a,b) are arranged in a manner such that they can pivot about longitudinal axes (18a,b) running in the longitudinal direction of the side flanks (10a,b), in which carrying position the supporting hoops (16a,b) which have been pivoted upwards bear against each other in the central region above the seat shell (2) in a manner enabling them to be grasped by a carrying hand, **characterized in that** the supporting hoops (16a,b) reach with their ends on both sides in the longitudinal direction of the side flanks (10a,b) beyond the centre of gravity of the seat shell (2) into the corner regions of the seat shell (2) where they are mounted pivotably.

2. Child's seat according to Claim 1, **characterized in that**, in the lowered rest position, the supporting hoops (16a,b) form supports for the seat shell (2) which are latched to the seat shell (2)

3. Child's seat according to Claim 2, **characterized in that** each supporting hoop (16a,b) has at least one curved central region which faces away from its pivot axis (18a,b) and, in the latching position, forms the runners of a rocker.

4. Child's seat according to one of the preceding claims, in which the seat shell (2) has integrally formed props (22, 24) for setting it down independently in a tilt-proof manner.

5. Child's seat according to Claim 4, in which the props (22, 24) are provided with a respective lateral recess (26a,b, 28a,b) for the latching reception of the supporting hoops (16a,b).

6. Child's seat according to Claim 5, in which the recesses (26a,b, 28a,b) are arranged at the free end of the props (22, 24) in such a manner that, in the latching position, the supporting hoops (16a,b) project beyond the supporting plane (19) defined by the free ends of the props (22, 24).

## Revendications

1. Siège d'enfant pour le transport d'un nourrisson dans un véhicule automobile, comprenant une coque de siège (2) dont les deux flancs latéraux (10a, 10b) sont munis de deux arceaux de transport (16a, 16b) agencés avec faculté de pivotement autour d'axes longitudinaux (18a, 18b) qui s'étendent en direction longitudinale des flancs latéraux (10a, 10b), dans laquelle les arceaux de transport (16a, 16b), pivotés vers le haut dans la position de transport de ladite coque, se contactent mutuellement dans la partie médiane au-dessus de la coque du siège (2) avec possibilité d'être saisis par une main pour le transport, **caractérisé en ce que** les arceaux de transport (16a, 16b) s'étendent avec leurs extrémités en direction longitudinale des flancs latéraux (10a, 10b) des deux côtés, au-delà du centre de gravité de la coque du siège (2), jusque dans les zones de coin de la coque du siège (2) où ils sont montés avec faculté de pivotement.

2. Siège d'enfant selon la revendication 1, **caractérisé en ce que** les arceaux de transport (16a, 16b) forment, dans la position de repos abaissée, des appuis pour la coque du siège (2), enclenchés avec la coque du siège (2).

3. Siège d'enfant selon la revendication 2, **caractérisé en ce que** chaque arceau de transport (16a, 16b) présente au moins une partie médiane cintrée, détournée de son axe de pivotement (18a, 18b), qui forme les patins d'une bascule dans la position enclenchée.

4. Siège d'enfant selon l'une des revendications précédentes, dans lequel la coque de siège (2) présente des appuis (22, 24) conformés pour une mise en place à stabilité autonome.

5. Siège d'enfant selon la revendication 4, dans lequel les appuis (22, 24) sont munis respectivement d'une cavité latérale (26a, 26b, 28a, 28b) pour le logement par enclenchement des arceaux de transport (16a, 16b).

6. Siège d'enfant selon la revendication 5, dans lequel la cavité (26a, 26b, 28a, 28b) sur l'extrémité libre des appuis (22, 24) est agencée de sorte que les arceaux de transport (16a, 16b) dépassent, dans la position d'enclenchement, au-delà du plan d'appui (19) défini par les extrémités libres des appuis (22, 24).
